# EUROPEAN PATENT SPECIFICATION

(11) **EP 0 598 590 B1**
(45) Date of publication and mention of the grant of the patent: **18.09.1996**
(21) Application number: 93309131.6
(22) Date of filing: 16.11.1993
(51) Int. Cl.: E03C 1/04

(54) **Faucet diverter valve**
Umschaltventilarmatur
Robinet inverseur

(30) Priority: 16.11.1992 US 977161
(43) Date of publication of application: 25.05.1994
(73) Proprietor: Amway Corporation, Ada Michigan 49355-0001 (US)
(72) Inventor: Pippel, Bradley J., Grandville Michigan 49418 (US)
(74) Representative: Robinson, Anthony John Metcalf

(56) References cited:
- WO-A-91/07614
- DE-A- 4 031 764
- US-A- 3 818 926
- US-A- 4 761 839
- US-A- 5 020 569

## Description

### Faucet Diverter Valve

The present invention relates to faucet diverter valves and, more particularly, to a three-way diverter valve for delivering a stream or spray of untreated water, or a flow of treated water.

The quality of water delivered through a faucet (also known as a tap) is a matter of concern to a great many people. The water furnished by municipal or building water supplies may be sufficiently pure for washing or rinsing purposes, but not of sufficient quality for drinking or cooking. Accordingly, devices are available which connect to a faucet and treat the water flowing out of the faucet. Such devices may either attach directly to the outlet of the faucet, or may include a diverter which directs the flow of water from the faucet, through the treatment device, and back to the faucet.

The filter and purifying media of such treatment devices are frequently consumable, so the devices are furnished with replaceable cartridges which replenish the media. Even so, it is desirable to bypass the treatment device when water quality is of lesser concern, such as when washing or rinsing, so that the life of the media may be extended as long as possible. Therefore, such devices have been provided with diverters or shut-offs which cause the water to bypass the treatment device. For example, there is described in US-A-5 083 589 a two-position diverter valve having means for connecting said valve in fluid communication with a water faucet, means for diverting water from said valve to a water treatment device and for returning treated water from said treatment device to said valve, and a handle having a pulled-out position and a pushed-in position. In the pushed-in position water flows from the faucet through the valve and out of an untreated water outlet, while in the pulled-out position the path to the untreated water outlet is blocked and water is diverted from the faucet, through the treatment device and back to the valve to exit through a treated water outlet.

It is an object of the present invention to provide an improved device for the purposes described. The features of the invention can be found in the accompanying claims. The invention thus provides, by contrast with US-A-5 083 589, a three position diverter valve with the possibility of selecting between two different untreated water outlets, for example a straight stream outlet and a spray outlet, in addition to the possible selection of diversion through the treatment device.

The present invention provides, in its preferred construction, a faucet diverter valve which easily connects to a variety of conventional faucets, and which can readily and selectably deliver a stream of untreated water, a spray of untreated water, or divert untreated water to the treatment device and return the treated water to the faucet.

According to a preferred embodiment of the invention, the faucet diverter valve includes a compression ring adapter which attaches to faucets having a wide variety of diameters. At one end of the faucet diverter valve there is a rotatable handle which is selectably turned to one of three positions to deliver the desired type of flow. The underside of the faucet diverter valve includes a straight stream outlet, a spray outlet, and a treated water stream outlet. By rotating this single handle to one of its three positions, water is selectably delivered through one of these three outlets. The faucet diverter valve further includes an untreated water exit through which water is directed to the treatment device, and a treated water entrance through which treated water returns to the faucet diverter valve and thereafter flows through the treated water stream outlet.

The faucet diverter valve according to the preferred embodiment, is provided with a generally cylindrical manifold in which is received a valve actuator in the form of a valve spool. The valve spool is caused to move axially within the manifold by the rotation of the handle. The manifold and the valve spool are provided with a number of openings which are brought in and out of alignment with each other by the movement of the valve spool. The various alignments of these openings create the necessary fluid passageways through which water is delivered selectably to either the straight stream outlet or the spray outlet, or by which water is diverted to the treatment device and returned through the treated water stream outlet.

The valve spool of the faucet diverter valve carries seals which engage the inner surface of the manifold to open and close the various fluid passageways, and which prevent intermingling of untreated and treated water. Furthermore, when the handle is in either of the two untreated flow positions, the passageway to and from the treatment device are sealed off by the valve spool, thus preventing any dripping from the treated water outlet.

The invention may be carried into practice in various ways but one faucet diverter valve constructed in accordance with the invention will now be described by way of example with reference to the accompanying drawings, in which:
Fig. 1 is a rear and underside perspective view of the faucet diverter valve;
Fig. 2 is a rear elevational view of the faucet diverter valve;
Fig. 3 is a rear and underside, exploded, perspective view of the faucet diverter valve;
Fig. 4 is a rear, elevational, exploded view showing the assembly of the handle, spool driver, valve spool, and manifold;
Fig. 4A is an enlarged sectional view taken along the line A-A of Fig. 4;
Fig. 4B is an auxiliary view taken along the line B-B of Fig. 4;
Fig. 5 is a rear elevational view of the valve spool;
Fig. 6 is a rear, sectional, elevational view of the valve spool;
Fig. 7 is a top view of the valve spool;
Fig. 8 is a bottom view of the valve spool;
Fig. 9 is a front elevational view of the manifold and valve spool with the manifold in vertical section showing the spool in the untreated spray position;
Fig. 10 is a sectional view taken substantially along the line X-X of Fig. 9;
Fig. 11 is similar to Fig. 9, but showing the valve spool in the untreated stream position;
Fig. 12 is similar to Fig. 9, but showing the valve spool in the treated stream position;
Fig. 13 is a front and top perspective view of the faucet diverter valve connected to a faucet and a water treatment device, with the handle in a first position for the delivery of a spray of untreated water;
Fig. 14 is similar to Fig. 13, but with the handle in a second position for the delivery of a stream of untreated water; and
Fig. 15 is similar to Fig. 13, but with the handle in a third position for the delivery of a stream of treated water.

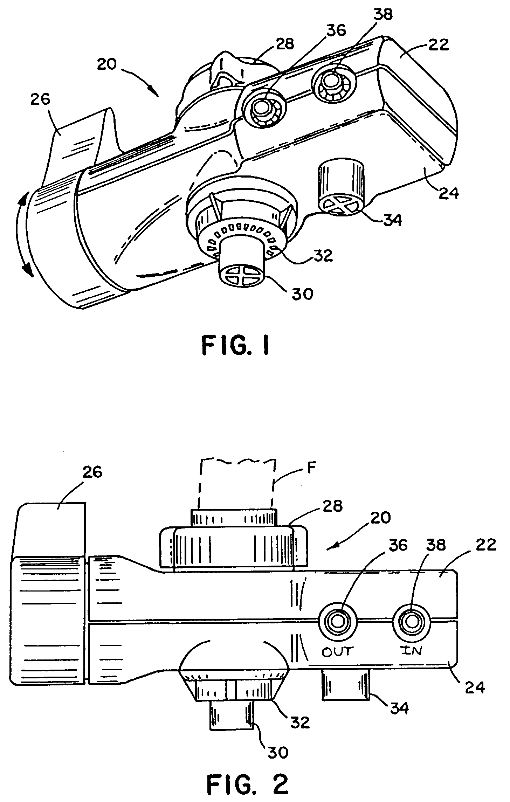

There is shown in Figs. 1 and 2 a faucet diverter valve 20 which includes in its general organisation an upper shroud 22, a lower shroud 24, a handle 26 rotatable about the longitudinal axis of the faucet diverter valve, a compression nut 28 encircling a fluid inlet by which the faucet diverter valve is attached to a faucet F, a straight stream outlet 30, a spray outlet 32, a treated stream outlet 34, an untreated water exit 36, and a treated water entrance 38. With the faucet diverter valve in its normal orientation, outlets 30, 32, and 34 are directed downwardly, while exit 36 and entrance 38 are directed toward the rear. Spray outlet 32 coaxially encircles straight stream outlet 30.

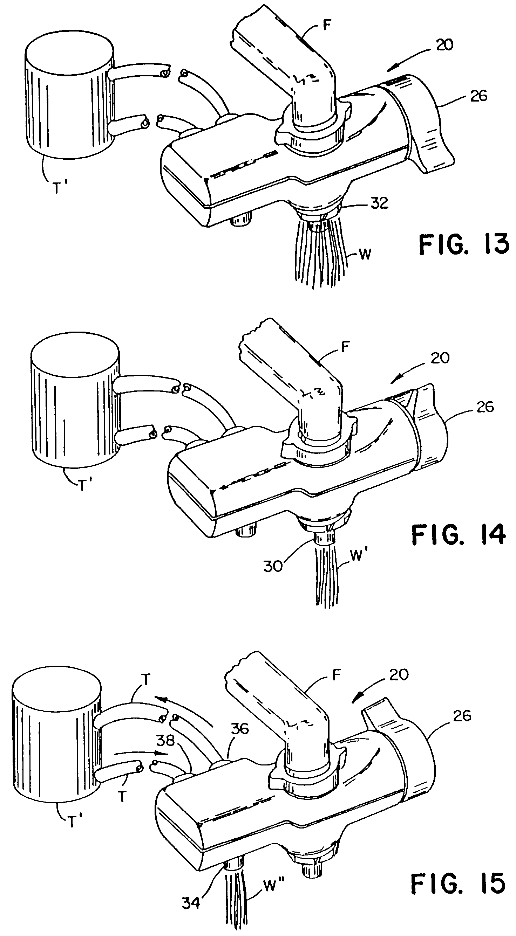

As shown in Figs. 13-15, and as described more fully below, handle 26 may be selectably rotated to any of three positions separated by increments of ninety degrees of rotation. In each of the three positions, untreated water is directed from the faucet F out of either the spray outlet 32 (Fig. 13) or the straight stream outlet 30 (Fig. 14), or treated water is directed out of the treated stream outlet 34 (Fig. 15). Water exiting the treated stream outlet 34 first passes from the faucet out of untreated water exit 36, and through suitable tubing T to a treatment device T'. Treated water returns from the treatment device through suitable tubing into treated water entrance 38, and finally through treated stream outlet 34.

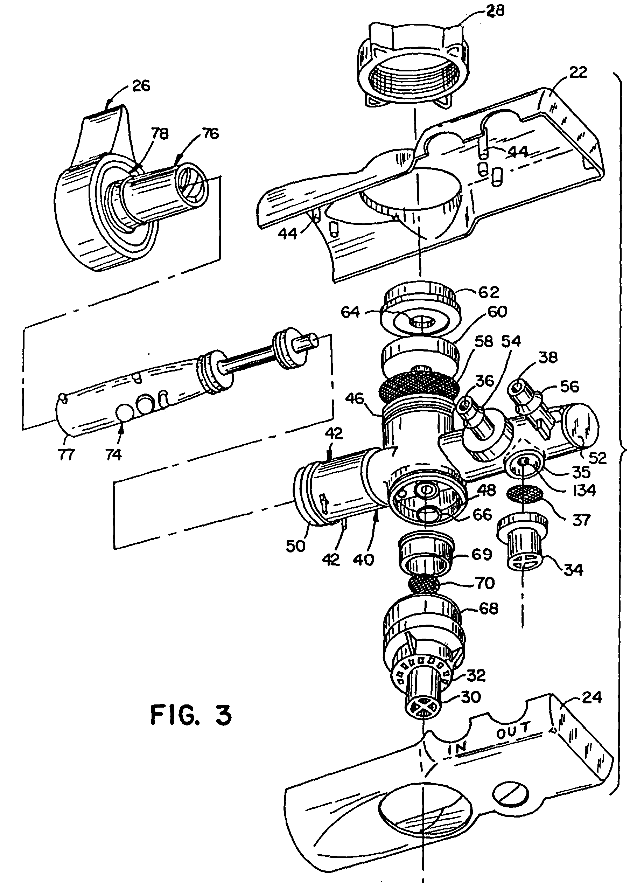

Further assembly details of the faucet diverter valve are shown in Fig. 3. Manifold 40 is housed between the upper and lower shrouds 22, 24. Several pins 42 are formed on the exterior of the manifold and interior of the bottom shroud which snap fit with corresponding recesses 44 formed on the interior of both shrouds to hold the shrouds in assembled relationship with the manifold.

Manifold 40 is generally in the form of an elongated cylinder having its longitudinal axis disposed coaxially with the axis of rotation of handle 26. The interior surface of the manifold encloses an axially elongated interior space. The central upper extent of the manifold is formed with an externally threaded, cylindrical inlet collar 46. The lower central extent of the manifold is formed with an externally threaded, cylindrical outlet collar 48 directly below the inlet collar 46. The end 50 of the manifold nearest the handle 26 is open and externally threaded. The end 52 of the manifold opposite the handle is closed.

The extent of the manifold adjacent end 52 is formed with the untreated water exit 36 and the treated water entrance 38 extending horizontally and transversely with respect to the longitudinal axis of the manifold. Exit 36 and entrance 38 are formed with external barbs 54, 56 for engaging and retaining flexible tubing leading to and from a treatment device. Below and between the exit 36 and entrance 38, the manifold is formed with downwardly directed collar 35 encircling opening 134. Treated stream outlet 34 is affixed to the collar 35. Screen 37 is captured between the opening 134 and the treated stream outlet 34.

Particle screen 58 is disposed within the inlet collar 46. Resilient compression gasket 60 rests atop screen 58. Adapter ring 62 rests atop compression gasket 60. Advantageously, adapter ring 62 is interchangeable with other adapters designed to mate with a variety of faucets. Compression nut 28 is screwed onto the threads of inlet collar 46 to capture the screen 58, compression gasket 60, and adapter ring 62.

Resilient O-rings 66, 68 and baffle ring 69 are disposed within the spray outlet 32. Straight stream outlet 30, spray outlet 32, and outlet screen 70 are joined as an assembly which is screwed onto outlet collar 48, thus capturing the O-rings 66, 68 and baffle ring 69.

Valve spool 74, to be described more fully below, is inserted coaxially within the manifold 40. Handle 26 is attached to spool driver 76. The end 77 of the valve spool 74 nearest the handle fits coaxially within the spool driver 76. Valve spool 74 and spool driver 76 are inserted within the open end 50 of the manifold and secured in place by spool retainer nut 78.

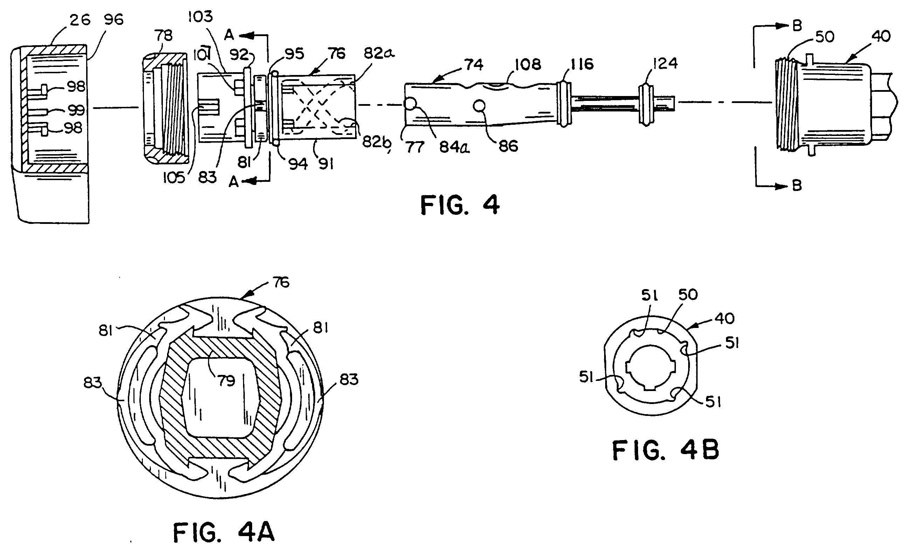

Further details of the assembly of the handle, spool retainer nut, spool driver, valve spool and manifold are shown in Figs. 4, 4A, and 4B.

Valve spool 74 is inserted into the open end 50 of the manifold 40. As shown in Fig. 4B, the inner circumference of the open end 50 of the manifold 40 is formed with four recesses 51 spaced apart by ninety degrees. As shown in Fig. 4A, spool driver 76 is formed with a narrowed central portion 79. A pair of diametrically opposed detent springs 81 are hooked on to the narrowed central portion 79. Each detent spring is formed with a protrusion 83. When the spool driver 76 is assembled within the manifold 40, the protrusions 83 of the detent springs engage diametrically opposed pairs of the recesses 51 of the manifold opening 50. Thus, the engagement of the protrusions 83 and recesses 51 cooperatively form detents which provide tactile feedback and facilitate positioning the handle 26 in one of its three operating positions.

Referring to Fig. 4, spool driver 76 is generally cylindrical having an end extent 91 with an inner diameter slightly larger than the outer diameter of the valve spool end 77. The inner surface of the spool driver is formed with a pair of diametrically opposed helical grooves 82a, 82b which receive bosses 84a and 84b (not shown) protruding from the valve spool. As described above, a central portion of the spool driver 76 is fitted with a pair of detent springs 81 which engage the inner circumference of the manifold adjacent the end 50.

Spool driver 76 further includes a flange 92 which abuts against the end 50 of the manifold 40. A resilient O-ring 94 is carried on the end extent 91 of the spool driver adjacent the detent springs 81 and positioned thereon by flange 95. The O-ring 94 seals against the inner surface of the manifold. Spool retainer nut 78 is threaded onto the end 50 to the manifold 40, thus capturing the valve spool 74 and spool driver 76 in assembly with the manifold 40.

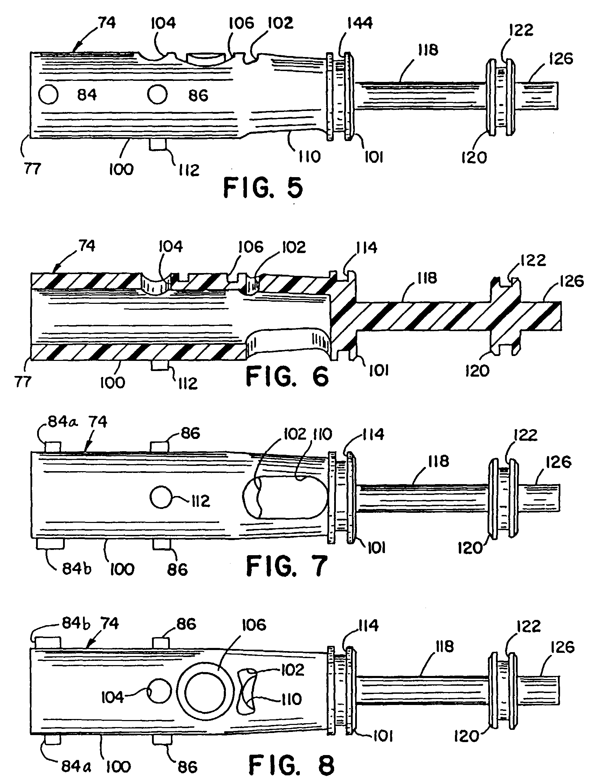

Details of the valve spool 74 are shown in Figs. 5-8. Valve spool 74 comprises a hollow cylindrical body portion 100 having an open end 77 and an opposite closed end 101. The lower extent of the body portion is formed with two axially spaced apart openings 102, 104 communicating with the interior of the body portion. Between the openings 102, 104 is formed a circular recess 106 in which is received a resilient O-ring 108 (Fig. 4) which seals against the inner surface of the manifold 40. The upper extent of the body portion is formed with an axially elongated opening 110.

The opposed outer side extends of the valve spool body portion are formed with the two bosses 84a, 84b, and a second pair of bosses 86. Boss 84b is larger than 84a. Helical groove 82b in the spool driver 76 (Fig. 4) is wider than helical groove 82a such that the spool driver and valve spool can be assembled only in the proper relationship.

The upper surface of the body portion of the valve spool is formed with a single boss 112. A groove 114 is formed around the body portion adjacent the closed end 101. Groove 114 receives a resilient O-ring (Fig. 4) which seals against the inner surface of the manifold 40.

Valve spool 74 further includes a shaft 118 extending axially from the end 101 of the cylindrical body portion 100. O-ring 116 is disposed between the body portion 100 and the shaft 118. The end of the shaft 118 opposite end 101 is formed with a disk-like bulkhead 120. The circumference of bulkhead 120 is formed with a groove 122 in which is received a resilient O-ring 124 (Fig. 4) which seals against the inner surface of the manifold 40.

Valve spool 74 also includes spacer 126 extending axially beyond bulkhead 120. The free end of spacer 126 is adapted to contact the inner surface of the closed end 52 (Fig. 3) of manifold 40 to limit the travel of the valve spool within the manifold.

Referring again to Fig. 4, handle 26 is formed with a recess 96 directed toward the manifold. Within the recess 96, the handle is formed with hooked fingers 98 and pin 99. Fingers 98 extend within the interior of the spool driver 76 and engage recesses 107 formed in the inner wall of the outer extent 103 of the spool driver. The outer extent of the spool driver is also formed with recesses 105 which are keyed to the pins 99. Thus, the handle is held in assembly with the spool driver and manifold. Rotation of the handle causes the spool driver 74 to rotate within the manifold. Rotation of the spool driver 74 is converted into axial, linear movement of the valve spool 74 within the manifold by the cooperation of the bosses 84a, 84b of the valve spool with the helical internal grooves 82a, 82b of the spool driver.

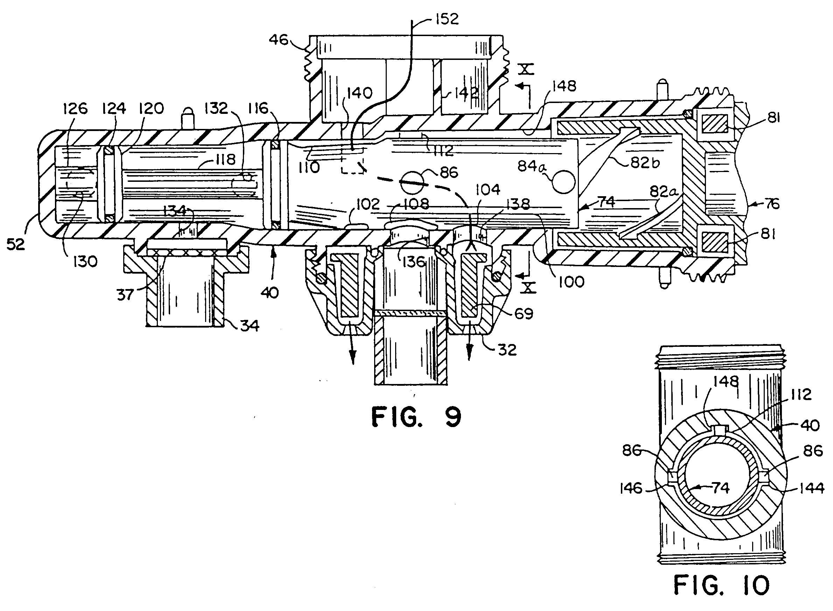

Fig. 9 shows further details of the manifold 40. In the portion of the manifold near the closed end 52 there is formed through the wall of the manifold an opening 130 which communicates with the treated water entrance 38 (Fig. 3). Axially spaced apart from opening 130 and disposed between opening 130 and the central portion of the manifold there is formed opening 132 which communicates with untreated water exit 36. Below and between openings 130 and 132 the manifold is formed with the opening 134 which communicates with treated stream outlet 34. At the bottom central portion of the manifold there is formed opening 136 which communicates with straight stream outlet 30. Adjacent to opening 136 and disposed between opening 136 and the open end of the manifold there is formed opening 138 in communication with spray outlet 32. The upper central portion of the manifold is formed with opening 140 in communication with the interior of inlet collar 46.

A support wall 142 extends across the interior of inlet collar 46. The upper edge of support wall 142 provides support for particle screen 58 and compression gasket 60 (Fig. 3).

As shown in Fig. 10, the internal surface of the central portion of the manifold 40 is formed with an opposed pair of side grooves 144, 146 and an upper groove 148. Side bosses 86 slide within grooves 144 and 146. Upper boss 112 slides within groove 148. The cooperation of the bosses 86, 112 with the grooves 144, 146 and 148 prevents valve spool 74 from rotating within the manifold.

The cooperation of the valve spool 74 with the manifold 40 to define the three operating positions of the faucet diverter valve is shown in Figs. 9, 11, and 12, and in corresponding Figs. 13, 14 and 15.

Figs. 9 and 13 show the operation of the faucet diverter valve 20 in which handle 26 is in a first position and in which untreated water W from the faucet F flows through the spray outlet 32. The path of the water is indicated in Fig. 9 by flow arrow 152. In this position, the handle is rotated such that valve spool is moved axially toward manifold end 52 with spacer 126 in contact with end 52. Valve spool opening 110 is aligned with manifold opening 140 such that water flows from the faucet through inlet collar 46 into the interior of the valve spool body portion 100. Water continues to flow through valve spool opening 104, through manifold opening 138, around baffle ring 69, and out spray outlet 32. Manifold opening 136 is encircled and sealed off by O-ring 108. Water is prevented from flowing to openings 132 and 134 by O-ring 116. Water is prevented from flowing through openings 130 and 134 by O-ring 124.

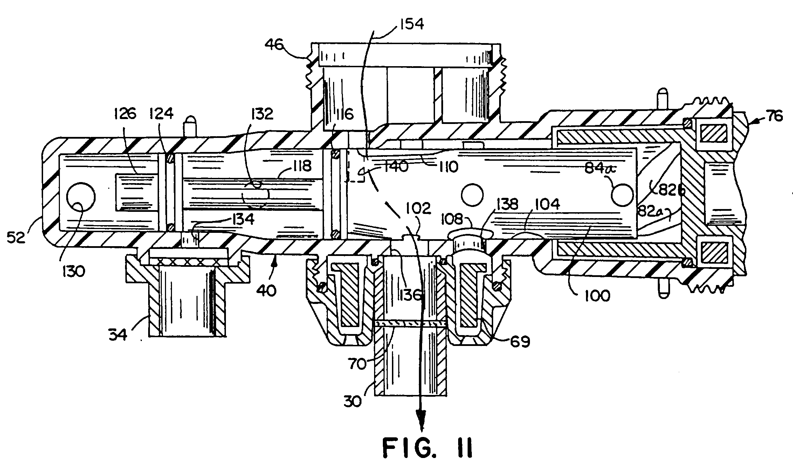

Figs. 11 and 14 show the operation of the faucet diverter valve 20 in which handle 26 is in a second position and in which untreated water W' from the faucet F flows through the straight stream outlet 30. The path of the water is indicated in Fig. 11 by flow arrow 154. In this position, the handle and spool driver 76 have been rotated ninety degrees with respect to the position shown in Figs. 9 and 13. Thus, the spacer 126 of the valve spool has withdrawn from the manifold end 52 by a distance equal to the spacing between the manifold openings 136 and 138. Due to the elongation of valve spool opening 110, opening 110 remains aligned with manifold opening 140 such that water flows from the faucet through inlet collar 46, opening 140, and opening 110 into the interior of the valve spool body portion 100. Water continues to flow through valve spool opening 102, through manifold opening 136, screen 70, and straight stream outlet 30. Manifold opening 138 is now encircled and sealed off by O-ring 108. Manifold openings 130, 132 and 134 continue to be sealed off from the flow of water by O-rings 124 and 116.

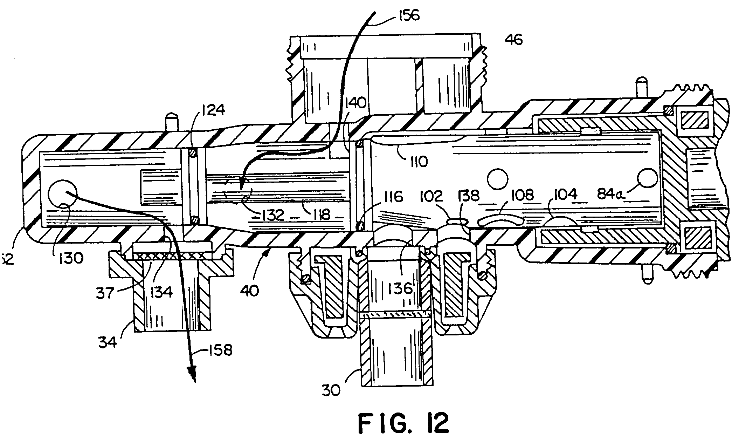

Figs. 12 and 15 show the operation of the faucet diverter valve 20 in which handle 26 is in a third position in which water is diverted through a treatment loop. Water from the faucet F flows out of exit 36 through tubing T to the treatment device T'. Water returns through the tubing into entrance 38 and is delivered as a stream of treated water W'' through outlet 34. The path of the water is indicated in Fig. 12 by flow arrows 156 and 158. In this position, the handle and spool driver 76 have been rotated an additional ninety degrees with respect to the position shown in Figs. 11 and 14. Thus, the valve spool 74 is withdrawn from the manifold end 52 an additional distance sufficient to place O-ring 124 and 116 on the opposite side of manifold openings 134 and 140 respectively. Water flow from the faucet through inlet collar 46 and manifold opening 140 into the interior portion of the manifold partially occupied by shaft 118. Water continues to flow through manifold opening 132 to the untreated water exit 36 (Fig. 3) and through the tubing to the treatment device. Treated water returns through the tubing to treated water entrance 38 (Fig. 3) and reenters the manifold through opening 130. The water exits the manifold through opening 134, screen 37, and treated stream outlet 34. O-ring 116 prevents untreated water from passing through openings 136 and 138. O-ring 124 at all times prevents untreated water from intermingling with treated water.

The major components of the faucet diverter valve, such as the manifold, spool, spool driver, handle, and shrouds, are preferably made of molded plastic material.

Thus, the invention provides an effective and easily operated device for delivering a stream or spray of untreated water from a faucet, and for diverting water from a faucet to a treatment device and returning the water to the faucet.

## Claims

1. A faucet diverter valve (20) comprising: a three-position valve having first, second and third outlets (30,32,34); means (28,62) for connecting said valve in fluid communication with a water faucet (F); means (36,38) for diverting water from said valve to a treatment device (T') and for returning treated water from said treatment device to said valve; a three-position handle (26) operatively associated with said valve and having a first position wherein water flows from the faucet (F) through said valve and out said first outlet (30), a second position wherein water flows from the faucet (F) through said valve and out said second outlet (32), and a third position wherein water flows from the faucet (F) through said valve, out of said valve through the treatment device (T), from the treatment device back to said valve and out said third outlet (34), and seal means (116) operatively associated with said valve for preventing water from flowing out of said third outlet when said handle is in said first and second positions.

2. A faucet diverter valve according to claim 1 wherein the position of said handle is selected by rotating said handle into one of its three positions.

3. A faucet diverter valve according to claim 1 or claim 2 wherein said first untreated fluid outlet comprises a spray outlet (32).

4. A faucet diverter valve according to any of claims 1 to 3 wherein said second untreated fluid outlet comprises a straight stream outlet (30).

5. A faucet diverter valve according to claim 1 or claim 2 wherein one of said first and second outlets is a spray outlet (32) and the other of said first or second outlets is a straight stream outlet (30), the straight stream outlet (30) being concentric with the spray outlet (32) and encircled by the spray outlet.

6. A faucet diverter valve according to any of claims 1 to 5 which comprises a manifold (40) affording the outlets (30,32,34) and the connecting means (28,62) and a valve member (74) within the manifold movable by the handle (26) to selectively effect said three water flows.

7. A faucet diverter valve according to claim 6 wherein said valve is axially reciprocably movable within the manifold, the handle is rotatable and there is converting means (82a,82b,84a,84b) to convert rotation of the handle to axial movement of the valve.

8. A faucet diverter valve according to claim 7 which includes means for interengaging said handle and said valve whereby rotation of said handle causes said valve to move between said first position and said second position.

9. A faucet diverter valve according to claim 8 wherein said means for interengaging comprises a cylindrical spool driver (76) formed with at least one internal helical groove (82a,82b) and extending within said manifold, a body portion (100) of said valve extending within said spool driver and having means (84a,84b) engaging said helical groove.

10. A faucet diverter valve according to claim 9 wherein said valve and said manifold are formed with cooperating means (86,112,144,146,148) for constraining said valve means to linear, axial movement within said manifold.

11. A faucet diverter valve according to any of claims 1 to 10 wherein said seal means further prevents fluid flow from said fluid entrance to said treated fluid outlet when said valve means is in said first position.

## Patentansprüche

1. Umschaltventilarmatur (20) mit einem Dreiwegeventil, das einen ersten, einen zweiten und einen dritten Auslaß (30,32,34) aufweist, ferner mit Mitteln (28,62) zum Anschluß dieses Ventils in Flüssigkeitsverbindung mit einer Wasserleitung (F), mit Mitteln (36,38) zum Abzweigen von Wasser von diesem Ventil zu einem Behandlungsgerät (T') und zum Rückleiten von behandeltem Wasser aus dem Behandlungsgerät zu dem Ventil, einem Dreistellungs-Handgriff (26), der in Wirkverbindung mit dem Ventil steht und eine erste Einstellposition, in der Wasser aus der Leitung (F) durch das Ventil und aus dem ersten Auslaß (30) strömt, eine zweite Einstellposition, in der Wasser von der Leitung (F) durch das Ventil und aus dem zweiten Auslaß (32) strömt, sowie eine dritte Einstellposition aufweist, in der Wasser von der Leitung (F) durch das Ventil, aus diesem Ventil durch das Behandlungsgerät (T), aus dem Behandlungsgerät zurück zum Ventil und aus dem dritten Auslaß (36) strömt, und mit Dichtmitteln (116), die dem Ventil wirkungsmäßig zugeordnet sind und verhindern, daß Wasser aus dem dritten Auslaß ausfließt, wenn sich der Handgriff in besagter erster und zweiter Einstellposition befindet.

2. Umschaltventilarmatur nach Anspruch 1, bei der die Einstellung des Handgriffs ausgewählt wird durch Verdrehung des Handgriffs in eine seiner drei Einstellpositionen.

3. Umschaltventilarmatur nach Anspruch 1 oder Anspruch 2, bei welcher der erste Auslaß für unbehandelte Flüssigkeit einen Sprühauslaß (32) aufweist.

4. Umschaltventilarmatur nach einem der Ansprüche 1 bis 3, bei dem der zweite Auslaß für unbehandelte Flüssigkeit einen Vollstrahlauslaß (30) aufweist.

5. Umschaltventilarmatur nach Anspruch 1 oder Anspruch 2, bei welcher der erste oder der zweite Auslaß ein Sprühauslaß (32) und der andere ein Vollstrahlauslaß (30) ist, wobei der Vollstrahlauslaß (30) konzentrisch zum Sprühauslaß (32) angeordnet und von dem Sprühauslaß umgeben ist.

6. Umschaltventilarmatur nach einem der Ansprüche 1 bis 5, die ein Verteilrohr (40), das die Auslässe (30,32,34) und die Verbindungsmittel (38,62) trägt, und ein Ventilglied (74) innerhalb des Verteilrohres aufweist, das über den Handgriff (26) bedienbar ist, um nach gewünschter Einstellung die drei Wasserströme zu bewirken.

7. Umschaltventilarmatur nach Anspruch 6, bei der das Ventil innerhalb des Verteilrohres axial hin und her bewegbar sowie der Handgriff verdrehbar ist und ferner Umwandlungsmittel (82a,82b,84a,84b) vorgesehen sind, um die Verdrehung des Handgriffs in eine axiale Bewegung des Ventiles umzusetzen.

8. Umschaltventilarmatur nach Ansprch 7, bei der die Mittel zum Eingriff mit dem Handgriff und dem Ventil eingerichtet sind, wodurch eine Drehung des Handgriffes bewirkt, daß das Ventil zwischen besagter erster Einstellposition und besagter zweiter Einstellposition bewegt wird.

9. Umschaltventilarmatur nach Anspruch 8, bei der die Eingriffsmittel einen zylindrischen Spulenzapfen (76) aufweisen, der mit wenigstens einer inneren Spiralnut (82a,82b) versehen ist und sich innerhalb des Verteilrohres erstreckt, wobei ein Abschnitt (100) des Körpers des Ventiles in den Spulenzapfen ragt und Mittel (84a,84b) zum Eingriff in die Spiralnut aufweist.

10. Umschaltventilarmatur nach Anspruch 9, bei der das Ventil und das Verteilrohr mit Mitteln (86,112,144,146,148) versehen sind, die zusammenwirken, um bei den Ventilmitteln eine erzwungene lineare Axialbewegung innerhalb des Verteilrohres zu bewirken.

11. Umschaltventilarmatur nach einem der Ansprüche 1 bis 10, bei der die Dichtmittel ferner verhindern, daß ein Flüssigkeitsstrom aus dem Flüssigkeitseinlaß zu dem Auslaß für behandelte Flüssigkeit strömt, wenn die Ventilmittel sich in ihrer ersten Einstellposition befinden.

## Revendications

1. Vanne de dérivation (20) pour robinet, comprenant: une vanne à trois positions qui présente des première, deuxième et troisième sorties (30, 32, 34); des moyens (28, 62) pour raccorder ladite vanne, selon une liaison de passage d'un fluide, à un robinet à eau (F); des moyens (36, 38) pour dériver de l'eau de ladite vanne vers un dispositif de traitement (T') et pour ramener l'eau traitée dudit dispositif de traitement à ladite vanne; une manette à trois positions (26) associée fonctionnellement à ladite vanne et possédant une première position dans laquelle l'eau s'écoule depuis le robinet (F) à travers ladite vanne et sort de celle-ci par ladite première sortie (30), une deuxième position dans laquelle l'eau s'écoule depuis le robinet (F) à travers ladite vanne et sort de celle-ci par ladite deuxième sortie (32), et une troisième position dans laquelle l'eau s'écoule depuis le robinet (F) à travers ladite vanne, sort de ladite vanne pour passer à travers le dispositif de traitement (T'), revient du dispositif de traitement à ladite vanne et sort de celle-ci par ladite troisième sortie (34), et des moyens d'étanchéité (116) associés fonctionnellement à ladite vanne pour empêcher l'eau de s'écouler par ladite troisième sortie quand ladite manette est dans lesdites première et deuxième positions.

2. Vanne de dérivation pour robinet selon la revendication 1, dans laquelle la position de ladite manette est sélectionnée par une rotation de ladite manette l'amenant dans l'une de ses trois positions.

3. Vanne de dérivation pour robinet selon la revendication 1 ou la revendication 2, dans laquelle ladite première sortie de fluide non traité comprend une sortie à diffuseur (32).

4. Vanne de dérivation pour robinet selon l'une quelconque des revendications 1 à 3, dans laquelle ladite deuxième sortie de fluide non traité comprend une sortie à jet rectiligne (30).

5. Vanne de dérivation pour robinet selon la revendication 1 ou la revendication 2, dans laquelle l'une desdites première et deuxième sorties est une sortie à diffuseur (32) et la seconde desdites première ou deuxième sorties est une sortie à jet rectiligne (30), la sortie à jet rectiligne (30) étant concentrique à la sortie à diffuseur (32) et entourée par la sortie à diffuseur.

6. Vanne de dérivation pour robinet selon l'une quelconque des revendications 1 à 5, qui comprend un distributeur (40) fournissant les sorties (30, 32, 34) ainsi que les moyens de raccordement (28, 62), et un élément formant soupape (74) à l'intérieur du distributeur, déplaçable par la manette (26) pour réaliser sélectivement lesdits trois écoulements d'eau.

7. Vanne de dérivation pour robinet selon la revendication 6, dans laquelle ladite soupape est déplaçable axialement, dans un sens et dans l'autre, à l'intérieur du distributeur, la manette est mobile en rotation et des moyens de conversion (82a, 82b, 84a, 84b) sont présents pour convertir la rotation de la manette en un déplacement axial de la soupape.

8. Vanne de dérivation pour robinet selon la revendication 7, qui comporte des moyens pour mettre en prise mutuelle ladite manette et ladite soupape, pour que la rotation de ladite manette oblige ladite soupape à se déplacer entre ladite première position et ladite deuxième position.

9. Vanne de dérivation pour robinet selon la revendication 8, dans laquelle lesdits moyens de mise en prise mutuelle comprennent un organe d'entraînement à bague cylindrique (76) pourvu d'au moins une gorge hélicoïdale intérieure (82a, 82b) et s'étendant dans ledit distributeur, une partie formant corps (100) de ladite soupape s'étendant à l'intérieur dudit organe d'entraînement à bague et présentant des moyens (84a, 84b) qui viennent en prise avec ladite gorge hélicoïdale.

10. Vanne de dérivation pour robinet selon la revendication 9, dans laquelle ladite soupape et ledit distributeur sont pourvus de moyens (86, 112, 144, 146, 148) coopérant entre eux pour imposer audit moyen formant soupape un déplacement linéaire axial à l'intérieur dudit distributeur.

11. Vanne de dérivation pour robinet selon l'une quelconque des revendications 1 à 10, dans laquelle lesdits moyens d'étanchéité empêchent, en outre, un écoulement de fluide de ladite entrée de fluide vers ladite sortie de fluide traité, quand ledit moyen formant soupape est dans ladite première position.
